(19) Europäisches Patentamt
European Patent Office
Office européen des brevets

(11) Veröffentlichungsnummer: **0 342 411 B1**

(12) **EUROPÄISCHE PATENTSCHRIFT**

(45) Veröffentlichungstag der Patentschrift: **02.11.94**

(51) Int. Cl.5: **C08L 101/10**, C09K 3/10, C08K 5/00

(21) Anmeldenummer: **89107718.2**

(22) Anmeldetag: **28.04.89**

Die Akte enthält technische Angaben, die nach dem Eingang der Anmeldung eingereicht wurden und die nicht in dieser Patentschrift enthalten sind.

# (54) Form- und Dichtungsmasse.

(30) Priorität: **14.05.88 DE 3816808**

(43) Veröffentlichungstag der Anmeldung: **23.11.89 Patentblatt 89/47**

(45) Bekanntmachung des Hinweises auf die Patenterteilung: **02.11.94 Patentblatt 94/44**

(84) Benannte Vertragsstaaten: **AT BE CH DE ES FR GB GR IT LI LU NL SE**

(56) Entgegenhaltungen:
**US-A- 3 971 751**

**CHEMICAL PATENTS INDEX, BASIC ABSTRACTS JOURNAL, Woche 8548, 29. Januar 1986,Sektion A, Klasse A0435, Nr. 85-299638/48, Derwent Publications Ltd, London,GB; & JP-A-60 206 812**

**CHEMICAL ABSTRACTS, Band 109, Nr. 12, 19. September 1988, Seite 89,Zusammenfassung Nr. 94910r, Columbus, Ohio, US;& JP-A-63 83 160**

(73) Patentinhaber: **Teroson GmbH**
**Postfach 10 56 20**
**D-69046 Heidelberg (DE)**

(72) Erfinder: **Bride, Gabriele**
**August Ziegelmüller Strasse 13**
**D-6907 Nussloch (DE)**
Erfinder: **Kern, Gisbert**
**Schefflenzer Strasse 28**
**D-6800 Mannheim (DE)**
Erfinder: **Lepka, W. Dr.**
**Freiburger Strasse 29**
**D-6900 Heidelberg 1 (DE)**

(74) Vertreter: **UEXKÜLL & STOLBERG Patentanwälte**
**Beselerstrasse 4**
**D-22607 Hamburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 342 411 B1

## Beschreibung

Die Erfindung betrifft eine Ein-Komponenten-Form- und Dichtungsmasse, welche unter Wasserausschluß lagerfähig, bei Wasserzutritt aber zu Elastomeren vernetzbar ist, und welche eine verbesserte Standfestigkeit aufweist.

Feuchtigkeitshärtende Ein-Komponenten Form- und Dichtungsmassen sind an sich bereits bekannt. Eine bekannte Gruppe derartiger Massen enthält als Prepolmere, welche durch Luftfeuchtigkeit vernetzbar sind, Verbindungen mit Silylendgruppen mit mindestens einem hydrolysierbaren Substituenten am Si-Atom. Derartige Prepolmere sowie daraus hergestellte Dichtungsmasen sind beispielsweise aus der US-A-3 971 751 sowie der EP-A 217 289 bekannt.

Insbesondere beim Einarbeiten größerer Mengen von anorganischen Füllstoffen, vor allem von thixotropierend wirkenden Füllstoffen wie hochdispersen Kieselsäuren treten jedoch Probleme auf. Insbesondere zeigen die Massen bei längerer Lagerung eine ungenügende Standfestigkeit, welche bis zum vollständigen Zusammenbruch der thixotropen Eigenschaften führen kann. Für die praktische Anwendung wird jedoch unbedingt ein standfester Dichtstoff benötigt, welcher keine Neigung zum Verlaufen (Nivellieren) zeigt.

Völlig überraschend wurde gefunden, daß die Standfestigkeit der vorbekannten Dichtungsmassen entscheidend verbessert werden kann, wenn man als Stabilisator ein Isocyanat oder ein Carbonsäurechlorid zusetzt. Besonders bevorzugt ist p-Toluylsulfonylisocyanat der Formel I

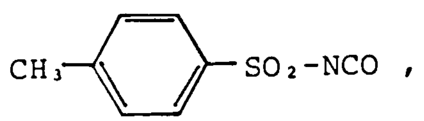

I

doch können auch andere Isocyanate wie Toluylendiisocyanat (TDI), Diphenylmethan-4,4-diisocyanat (MDI), Naphthalindiisocyanat (NDI), Isophorondiisocyanat (IPDI) Hexamethylendiisocyanat (HDI) und andere verwendet werden. Bevorzugte Säurechloride sind Benzoylchlorid und 3,5-Dinitrobenzoylchlorid. Bezogen auf das Gesamtgewicht der Masse reichen Zusatzmengen von ca. 0,01 bis 1, vorzugsweise 0,05 bis 0,10 Gew.% zur Erzielung der gewünschten Standfestigkeit aus. Bislang ist p-Toluylsulfonylisocyanat, welches im Handel unter der Bezeichnung "Zusatzmittel TI" von der Bayer AG, Leverkusen, erhältlich ist, als Mittel zum Abfangen von Wasserspuren in Polyurethanmassen eingesetzt worden.

In ähnlicher Weise beschreibt die JP-A-60206812 die Verwendung von Wasserfängern wie z.B. Monoisocyanate als Wasserfänger in lösungsmittelhaltigen Lacken auf der Basis von Polymeren mit hydrolysierbaren Silylgruppen. Ziel dieses Einsatzes von Wasserfängern ist die Stabilität der Viskosität über die übliche Lagerzeit der Lackzusammensetzung.

Dieses Problem der Viskositätserhöhung tritt bei den erfindungsgemäßen Massen nicht auf, sie weisen überraschenderweise auch ohne Zusatz von Isocyanaten oder Carbonsäurechloriden eine ausreichende Viskositätsstabilität auf. Es kann keine Erklärung dafür gegeben werden, wieso die genannten Verbindungen zu der beobachteten Erhöhung der Standfestigkeit der hochgefüllten Dichtstoffe führen, ohne sonstige Eigenschaften der Massen zu beeinträchtigen. Überraschenderweise bleibt die hohe Standfestigkeit der erfindungsgemäßen Zusammensetzungen auch über längere Lagerzeit dieser Zusammensetzungen erhalten, während vergleichbare Zusammensetzungen ohne den Zusatz der Isocyanate bzw. Carbonsäurechloride bereits nach kurzer Lagerzeit ihre Standfestigkeit verlieren.

Es handelt sich bei den silylmodifizierten Prepolymeren um Polyether, Polyester, Ether-Ester-Blockcopolymere, Vinylpolymere, Phthalsäurediallylester und deren Prepolymere sowie Phthalsäurediallylestercopolymere, welche jeweils mindestens eine Silylgruppe der folgenden Formel II im Molekül enthalten

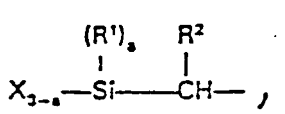

(II)

in welcher $R^1$ und $R^2$ unabhängig voneinander Wasserstoffatome oder Alkyl-, Aryl- oder Aralkylreste mit bis zu 10 Kohlenstoffatomen bedeuten, X eine hydrolysierbare Gruppe darstellt und a 0, 1 oder 2 sein kann. X kann ein Halogenatom oder eine Alkoxy-, Aminoxy-, Phenoxy-, Thioalkoxy-, Acyloxy-, Säureamid-, Mercapto- oder Ketoximatogruppe sein. Vorzugsweise handelt es sich um eine Alkoxygruppe mit 1 bis 5

Kohlenstoffatomen im Alkylrest. Eine besonders bevorzugte Silyl-Endgruppe ist die Dimethoxymethylsilylgruppe.

Das Molekulargewicht der Prepolymeren kann zwischen 500 und 20000, vorzugsweise zwischen 500 und 15000 liegen. Ganz besonders bevorzugt liegt das Molekulargewicht bei 3000 bis 12000. Besonders bevorzugte Prepolymere sind silylmodifizierte Polyether, welche durch Hydrosilylierung von Polyethern mit olefinisch ungesättigten Endgruppen erhalten werden können, vergl. die US-A-3 971 751. Geeignete silylmodifizierte Polyether entsprechen z.B. der Formel III

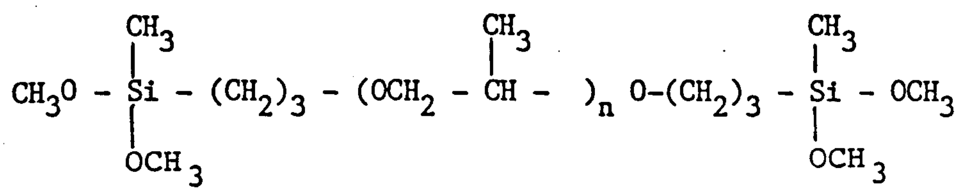

III

Zur Herstellung von feuchtigkeitshärtenden Form- und Dichtungsmassen werden den bekannten silylmodifizierten Polymeren metallorganische Zinnverbindungen als Katalysator zugesetzt, beispielsweise Zinn(II)-octoat oder Dibutylzinnlaurat und Dibutylzinnmaleat (US-A-3 971 751). Die Anwendungseigenschaften der erfindungsgemäßen Massen werden jedoch auch durch die Auswahl der metallorganischen Zinnverbindung beeinflußt. Als besonders geeignete Katalysatoren haben sich das bei ca. 150 °C erhaltene Reaktionsprodukt von Dibutylzinnoxid mit Dioctylphthalat und Dibutylzinnacetat erwiesen. Überraschenderweise sind ferner Dibutylzinndialkylate von $C_3$- bis $C_6$-Alkoholen, insbesondere Dibutylzinndibutylat besonders geeignet.

Ferner werden anorganische Füllstoffe wie Ruß, Calciumcarbonat, Titandioxid und dergleichen sowie Weichmacher, insbesondere Phthalsäureester wie Dioctylphthalat und Butylbenzylphthalat oder Phosphorsäureester wie Tricresylphosphat zugesetzt.

Als anorganische Füllstoffe finden erfindungsgemäß vorzugsweise hochdisperse Kieselsäuren, vor allem pyrogene Kieselsäuren oder Fällungskieselsäuren Verwendung, welche thixotropierend wirken und deren thixotropierende Eigenschaften in den erfindungsgemäßen Massen auch nach längerer Lagerung erhalten bleibt. Schließlich können die Massen übliche UV-Stabilisierungsmittel und Alterungsschutzmittel enthalten. Aminosilane wie z.B. $\gamma$-Glycidyloxypropyl- oder $\gamma$-Aminopropyl-trimethoxysilan dienen vor allem der Verbesserung der Haftung auf Glas, Metallen etc. Gleichzeitig fangen sie eventuelle Feuchtigkeit in den Füllstoffen ab, stellen dadurch eine gute Lagerstabilität sicher und wirken in gewissem Umfang als Co-Katalysator.

Bei der Herstellung der erfindungsgemäßen Massen hat es sich als besonders günstig erwiesen, wenn man die metallorganischen Zinnverbindungen mit dem Stabilisator gemeinsam nach dem Vermischen der übrigen Bestandteile der Masse zufügt. Ein sonst bei Zusatz der Zinnverbindungen häufig auftretendes Zusammenbrechen der Thixotropie wird dadurch vermieden.

Zur näheren Erläuterung der Erfindung sollen die nachfolgenden Beispiele dienen, auf welche die Erfindung jedoch nicht beschränkt ist.

## Beispiel 1

Im Rahmen dieses Beispiels wurden verschiedene metallorganische Zinnverbindungen hinsichtlich ihrer katalytischen Wirksamkeit überprüft. Zu diesem Zweck wurde eine Basismischung aus folgenden Komponenten hergestellt:

30,0 Gew.% eines Polyetherprepolymeren mit Dimethoxymethylsilyl-Endgruppen (Viskosität 10000-26000 mPas (100-260 P)),
6,34% Dioctylphthalat, 11,83% Titandioxid-Paste (52% $TiO_2$ in Dioctylphthalat)
0,30% Alterungsschutzmittel,
0,30% UV-Schutzmittel,
45,39% Kreide,
4,34% hydriertes Rizinusöl.

In eine 310 ml Kartusche wurden jeweils 200 g der obigen Basismischung eingefüllt und mit 0,2 bis 0,8 g der jeweils zu testenden Katalysatorzusammensetzung versetzt. Anschließend wurde die Mischung ca. 2 Minuten lang unter Vakuum in einem Kartuschenmischgerät gerührt.

Danach erfolgte der Auftrag der Dichtstoffe auf Glasplatten bzw. mit Polyethylenfolie bespannte Bretter zur Bestimmung der Hautbildungszeit (in Minuten) und der Oberflächenklebrigkeit (nach 24 Stunden). Die erhaltenen Ergebnisse sind in der nachfolgenden Tabelle 1 zusammengestellt. Neben dem Reaktionsprodukt aus Dibutylzinnoxid mit Dioctylphthalat (bei 150 ° C) erwies sich überraschenderweise Dibutylzinndibutylat als gut wirksam. Darüber hinaus zeigte sich bei den Versuchen, daß neben der metallorganischen Zinnverbindung ein Silan wie γ-Glycidyloxypropyltrimethoxysilan oder γ-Aminopropyltrimethoxysilan vor allem zur Erzielung guter Haftungseigenschaften, aber auch für die Lagerstabilität wichtig ist.

Tabelle 1

| Test Nr. | 1 | 2 | 3 | 4 | 5 | 6 | 7 | 8 | 9 | 10 | 11 | 12 |
|---|---|---|---|---|---|---|---|---|---|---|---|---|
| γ-Glycidyloxypropyltrimethoxysilan | - | 0,60 | - | 0,60 | 0,60 | - | 0,60 | 0,23 | - | 0,20 | - | - |
| γ-Aminopropyltrimethoxysilan | 0,60 | - | - | 0,20 | 0,40 | 0,60 | - | 0,17 | - | - | 0,20 | 0,60 |
| Dibutylzinnoxid + Dioctylphthalat bei 150 °C | - | - | 0,90 | 0,90 | 0,90 | 0,90 | 0,90 | 0,90 | - | - | - | - |
| Dibutylzinndilaurat | - | 0,80 | - | - | - | - | - | - | - | - | - | - |
| Dibutylzinndibutylat | - | - | - | - | - | - | - | - | 0,60 | 0,40 | 0,40 | 0,40 |
| Hautbildungszeit (min) | z.l. | z.l. | v. | 49 | 30 | 25 | 90 | 50 | v. | 60 | 35 | 20 |
| Glashaftung | - | - | - | +- | +- | - | +- | + | - | + | + | + |
| Oberflächenklebrigkeit (nach 24 h) | 0 | 0 | 0 | + - | + | + - | + | + - | 0 | + - | + - | + - |

z. l. = Hautbildungszeit zu lang
v = Masse vulkanisier
\+ = sehr gut
\+ - = gut
0 = nicht bestimmt

Oberflächenklebrigkeit
\+ = keine
\+ - = gering
0 = nicht bestimmt

Glashaftung n. 8 Tg. b. Raumtemp., 3 Tg. unter $H_2O$
\+ = sehr gut
\+ - = schwer abziehbar, mit Filmrückstand
\- = keine

Beispiel 2

Es wurden die Dichtstoffe A bis D hergestellt, welche sich im wesentlichen dadurch voneinander unterscheiden, daß die Dichtstoffe B bis D zusätzlich ein Isocyanat oder Säurechlorid enthalten:

| | A | B | C | D |
|---|---|---|---|---|
| MS-Polymer x) 20 A | 19,00 | 19,00 | 19.00 | 19.00 |
| MS-Polymer x) 300 | 13,00 | 13,00 | 13.00 | 13.00 |
| Dioctylphthalat | 29,03 | 28,53 | 21.09 | 21.09 |
| Di(N-methylbenzamido)-methyl-ethoxysilan | 0,50 | 0,50 | 0,50 | 0,50 |
| γ-Aminopropyltri-methoxysilan | 0,80 | 0,80 | 0,80 | 0,80 |
| Vinyltrimethoxysilan | 0,60 | 0,60 | 0,60 | 0,60 |
| Alterungsschutzmittel | 0,30 | 0,30 | 0,30 | 0,30 |
| UV-Schutzmittel | 0,30 | 0,30 | 0,30 | 0,30 |
| hochdisperse Kieselsäure | 4,50 | 4,50 | 4,50 | 4,50 |
| Kreide | 24,52 | 24,52 | 32,06 | 32,06 |
| Dibutylzinndibutylat | 0,70 | - | - | - |
| Zwischenprodukt 1 | 6,75 | 6,75 | 6,75 | 6,75 |
| Zwischenprodukt 2 | - | 1,20 | - | - |
| Zwischenprodukt 3 | - | - | 1,20 | - |
| Zwischenprodukt 4 | - | - | - | 1,20 |
| | 100,00 | 100,00 | 100,00 | 100,00 |

| Zwischenprodukt | 1 |
|---|---|
| Dioctylphthalat | 43,530 |
| Eisenoxide | 56,470 |
| | 100,00 |

| Zwischenprodukt | 2 | 3 | 4 |
|---|---|---|---|
| Dioctylphthalat | 34,723 | 34,723 | 34,723 |
| Dibutylzinndibutylat | 58,333 | 58,333 | 58,333 |
| p-Toluylsulfonylisocyanat | 6,944 | - | - |
| Diphenylmethan-4,4'-diisocyanat | - | 6,944 | - |
| Benzoylchlorid | - | - | 6,944 |
| | 100.00 | 100.00 | 100.00 |

x) Bis[3-(methyldimethoxysilyl)propyl]-polyoxypropylen

Alle Dichtstoffe zeigten einen sehr kurze Hautbildungszeit von 10 bis 15 Minuten sowie gute Haftung auf verschiedenem Untergrund. Die Formulierungen unterschieden sich jedoch auffällig in ihrer Standfestigkeit. Während die Dichtstoffe B bis D auch nach längerer Lagerung ausgezeichnete Standfestigkeit zeigten, erwies sich der Dichtstoff A als nicht standfest; trotz Zusatz der thixotropierend wirkenden hochdispersen Kieselsäure waren die thixotropen Eigenschaften bereits nach kurzer Zeit nicht mehr vorhanden, so daß der Dichtstoff A auf glattem Untergrund verlief, d.h. zum Nivellieren neigte.

## Patentansprüche

1. Standfeste Ein-Komponenten-Form- und -Dichtungsmasse auf Basis von Prepolymeren, welche Silyl-Endgruppen mit mindestens einem hydrolysierbaren Substituenten am Si-Atom enthalten, metallorganischen Zinnverbindungen als Katalysator sowie anorganischen Füllstoffen, dadurch gekennzeichnet, daß ein Isocyanat und/oder ein Carbonsäurechlorid in einer Menge von 0.01 bis 1 Gew.% als Stabilisator zugesetzt ist.

2. Masse gemäß Anspruch 1, dadurch gekennzeichnet, daß als Stabilisator p-Toluylsulfonylisocyanat Zugesetzt ist.

3. Masse nach Anspruch 1 oder 2, dadurch gekennzeichnet, daß sie als metallorganische Zinnverbindung das Reaktionsprodukt von Dibutylzinnoxid mit Dioctylphthalat und/oder Dibutylzinnacetat und/oder ein Dibutylzinndialkylat eines $C_3$- bis $C_6$-Alkylalkohols enthält.

4. Masse nach Anspruch 3, dadurch gekennzeichnet, daß sie Dibutylzinndibutylat enthält.

5. Masse nach einem der Ansprüche 1 bis 4, dadurch gekennzeichnet, daß sie als anorganischen Füllstoff hochdisperse Kieselsäure enthält.

6. Masse nach einem der Ansprüche 1 bis 5, dadurch gekennzeichnet, daß sie ein silanmodifiziertes Polyetherprepolymer enthält.

7. Verfahren zur Herstellung einer Ein-Komponenten-Form- und Dichtungsmasse gemaß den Ansprüchen 1 bis 6, dadurch gekennzeichnet, daß man die metallorganischen Zinnverbindungen und den Stabilisator gemeinsam nach dem Vermischen der übrigen Bestandteile zu der Masse zufügt.

8. Verwendung von 0.01 bis 1 Gew.% an Isocyanaten und/oder Carbonsäurechloriden als Thixotropie-Stabilisatoren in standfesten Ein-Komponenten-Form- und Dichtungsmassen gemäß einem der Ansprüche 1 bis 6.

## Claims

1. A stable one-component moulding and sealing compound based on prepolymers containing terminal silyl groups with at least one hydrolyzable substituent at the Si atom, organometallic tin compounds as catalysts and inorganic fillers, characterized in that an isocyanate and/or a carboxylic acid chloride is added as stabilizer in a quantity of 0.01 to 1% by weight.

2. A compound as claimed in claim 1, characterized in that it contains p-tolylsulfonyl isocyanate as stabilizer.

3. A compound as claimed in claim 1, characterized in that it contains the reaction product of dibutyl tin oxide with dioctyl phthalate and/or dibutyl tin acetate and/or a dibutyl tin dialkylate of a $C_{3-6}$ alkyl alcohol as the organometallic tin compound.

4. A compound as claimed in claim 3, characterized in that it contains dibutyl tin dibutylate.

5. A compound as claimed in any of claims 1 to 4, characterized in that it contains highly disperse silica as the inorganic filler.

6. A compound as claimed in any of claims 1 to 5, characterized in that it contains a silane-modified polyether prepolymer.

7. A process for the production of the one-component moulding and sealing compound claimed in claims 1 to 6, characterized in that the organometallic tin compounds and the stabilizer are added to the compound together after the other constituents have been mixed.

8. The use of 0.01 to 1% by weight of isocyanates and/or carboxylic acid chlorides as thixotropy stabilizers in the stable one-component moulding and sealing compounds claimed in claims 1 to 6.

## Revendications

1. Compositions de moulage et d'étanchéité à un composant stable, à base de pré-polymères qui renferment des groupes terminaux silyle, ayant au moins un substituant hydrolysable sur l'atome de silicium, des composés stanniques organométalliques, comme catalyseur ainsi que des substances de remplissage minérales, caractérisé en ce que l'on ajoute un isocyanate et/ou un chlorure d'acide carboxylique en quantité de 0,01 à 1 % en poids, en tant qu'agent stabilisant.

2. Composition selon la revendication 1, caractérisée en ce qu'elle renferme comme agent stabilisant l'isocyanate de p-toluènesulfonyle.

3. Composition selon les revendication 1 et 2, caractérisée en ce qu'elle renferme comme composé stannique organométallique, le produit de réaction de l'oxyde de dibutylétain avec le phtalate de dioctyle et/ou l'acétate de dibutylétain et/ou un alcoylate de dibutylétain d'un alcanol en $C_3$ à $C_6$.

4. Composition selon la revendication 3, caractérisé en ce qu'elle contient du dibutylate de dibutylétain.

5. Composition selon l'une des revendications 1 à 4, caractérisée en ce qu'elle contient comme substance de remplissage minérale, de l'acide silicique hautement dispersé.

6. Composition selon l'une des revendications 1 à 5, caractérisée en ce qu'elle contient un pré-polymère de polyéther modifié par un silane.

7. Procédé d'obtention d'une composition de moulage et d'étanchéité à un composant, selon les revendications 1 à 6, caractérisé en ce que l'on ajoute les composés stanniques organométalliques et l'agent stabilisant conjointement après le mélange des constituants restants, à la composition.

8. Utilisation de 0,01 à 1 % en poids d'isocyanates et/ou de chlorures d'acide carboxylique en tant qu'agents stabilisants de thixotropie dans des compositions de moulage et d'étanchéité stables à un composant conformément à l'une des revendications 1 à 6.